# EUROPEAN PATENT SPECIFICATION

(11) **EP 3 472 929 B1**
(45) Date of publication and mention of the grant of the patent: **09.06.2021**
(21) Application number: 16731123.2
(22) Date of filing: 20.06.2016
(51) Int. Cl.: H02P 6/10

(54) **SYSTEMS AND METHODS FOR REDUCTION OF HARMONIC OSCILLATIONS IN ELECTRICAL MACHINES**
SYSTEME UND VERFAHREN ZUR REDUZIERUNG VON HARMONISCHEN SCHWINGUNGEN IN ELEKTRISCHEN MASCHINEN
SYSTÈMES ET PROCÉDÉS DE RÉDUCTION D'OSCILLATIONS HARMONIQUES DANS DES MACHINES ÉLECTRIQUES

(43) Date of publication of application: 24.04.2019
(73) Proprietor: Nuovo Pignone Tecnologie SrL, 50127 Florence (IT)
(72) Inventor: TENCA, Pierluigi, 85748 München (DE); ROTONDO, Paola, 50127 Florence (IT)
(74) Representative: BRP Renaud & Partner mbB Rechtsanwälte Patentanwälte Steuerberater
(86) International application number: PCT/EP2016/064211
(87) International publication number: WO 2017/220121

(56) References cited:
- EP-A2- 2 337 176
- US-A- 4 427 934
- US-A1- 2006 232 250
- US-A1- 2008 080 106
- US-B2- 7 283 378

## Description

### BACKGROUND

The field of the disclosure relates generally to turbomachinery systems, and, more specifically, to auxiliary power converters and systems and methods for reduction of harmonic oscillations in electrical machines.

US 2006/232250 A1 discloses a grid rectifier and a load inverter and the generation of inverter control signals for damping torsional vibration by modulating active power through the load inverter.

In known turbomachinery systems employing electrical machines which either drive turbomachines, e.g., electrical motors in pumping operations and compression plants, or are driven by turbomachines, e.g., electrical power generators, complex interactions of electrical machine harmonic oscillations and torsional dynamics of shafts in rotating equipment trains cause sub-synchronous torsional interactions (SSTIs). In such known turbomachinery systems, e.g., liquefied natural gas compression plants, SSTIs and resulting oscillations cause increased maintenance costs, reduced operational efficiency, and equipment service life reduction.

In at least some known turbomachinery systems employing electrical machines, SSTIs experienced by shafts and rotating machinery coupled thereto are caused by torque imbalances arising in electrical machines including motors and generators. Such electrical machines, shafts, and associated rotating machinery often form long trains of equipment in which SSTIs arising in one portion of the train generate undesirable effects not only at that location, but at various other locations distant from the initial point of origin. Also, in such known turbomachinery systems, mitigation of SSTIs and resulting aberrant torque is expensive, requires substantial modification of existing systems and plant equipment, and is subject to design constraints from existing electrical and mechanical loads. Further, in such known turbomachinery systems, known SSTI and torque mitigation devices and systems are complex, require elaborate control systems, are cumbersome to integrate into existing plant operations, and require complete plant shutdown for their installation and maintenance.

### BRIEF DESCRIPTION

In one aspect, a power converter for an electrical machine drive system is provided. The electrical machine drive system includes a power source and an electrical machine including a shaft. The power converter includes a first converter coupled to the power source, a second converter coupled to the electrical machine, and at least one direct current (DC) link coupled to the first converter and coupled to the second converter and extending therebetween. The at least one DC link includes at least one inductor configured to maintain a magnetic flux during operation of the electrical machine drive system. The power converter also includes at least one auxiliary converter electrically isolated from the power source and the electrical machine. The at least one auxiliary converter includes an auxiliary power supply, and at least one auxiliary inductor coupled to the auxiliary power supply and electromagnetically coupled to the at least one inductor. The at least one auxiliary inductor is configured to alternately energize and de-energize to alternately apply and remove, respectively, a corrective magnetic flux to the at least one inductor to dampen harmonic oscillations of at least one of the shaft and the electrical machine.

In another aspect, a method of damping harmonic oscillations of an electrical machine drive system is provided. The electrical machine drive system includes a power source, an electrical machine including a shaft, a DC link including an inductor, and an auxiliary converter including an auxiliary inductor electromagnetically coupled to the inductor. The method includes detecting, through a sensor coupled to the electrical machine drive system, a physical characteristic of the electrical machine drive system representative of harmonic oscillations of at least one of the shaft and the electrical machine. The method also includes determining, through data transmitted by the sensor, a presence of harmonic oscillations. The method further includes energizing the auxiliary inductor to apply a corrective magnetic flux to the inductor to dampen harmonic oscillations of at least one of the shaft and the electrical machine.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic diagram of an exemplary electrical machine drive system;
FIG. 2 is a schematic diagram of an alternative electrical machine drive system;
FIG. 3 is a schematic diagram of an exemplary auxiliary power supply that may be used in the electrical machine drive systems shown in FIGs. 1 and 2;
FIG. 4 is a graphical representation of operation of the electrical machine drive systems and the auxiliary power supply shown in FIGs. 1-3; and
FIG. 5 is a flowchart diagram of an exemplary method of damping harmonic oscillations of an electrical machine in an electrical machine drive system that may be used with the electrical machine drive systems shown in FIGs. 1 and 2.

Unless otherwise indicated, the drawings provided herein are meant to illustrate features of embodiments of this disclosure. These features are believed to be applicable in a wide variety of systems comprising one or more embodiments of this disclosure. As such, the drawings arc not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, and such ranges are identified and include all the sub-ranges contained therein unless context or language indicates otherwise.

As used herein, the terms "processor" and "computer" and related terms, e.g., "processing device", "computing device", and "controller" are not limited to just those integrated circuits referred to in the art as a computer, but broadly refers to a microcontroller, a microcomputer, a programmable logic controller (PLC), an application specific integrated circuit (AISC), and other programmable circuits, and these terms are used interchangeably herein. In the embodiments described herein, memory may include, but is not limited to, a computer-readable medium, such as a random access memory (RAM), and a computer-readable non-volatile medium, such as flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a mouse and a keyboard. Alternatively, other computer peripherals may also be used that may include, for example, but not be limited to, a scanner. Furthermore, in the exemplary embodiment, additional output channels may include, but not be limited to, an operator interface monitor.

Furthermore, as used herein, the term "real-time" refers to at least one of the time of occurrence of the associated events, the time of measurement and collection of predetermined data, the time to process the data, and the time of a system response to the events and the environment. In the embodiments described herein, these activities and events occur substantially instantaneously.

The auxiliary power converters for reduction of harmonic oscillations in electrical machines and associated systems and methods described herein reduce sub-synchronous torsional interactions (SSTIs) of shafts and rotating machinery including electrical machines in rotating equipment trains. The embodiments described herein also mitigate undesirable effects of SSTIs and aberrant torques arising therefrom in turbomachinery systems. The embodiments described herein further reduce torque imbalances in electrical machines employed in turbomachinery systems. The auxiliary power converters for reduction of harmonic oscillations in electrical machines and associated systems and methods described herein also reduce operating and maintenance costs and increase operational efficiency of turbomachinery systems. The embodiments described herein further provide less complex and less expensive SSTI mitigation devices, systems, and methods that are easier to operate and integrate into existing plant designs. The embodiments described herein also enable installation and maintenance of SSTI mitigation devices and systems without shutting down turbomachinery system operations.

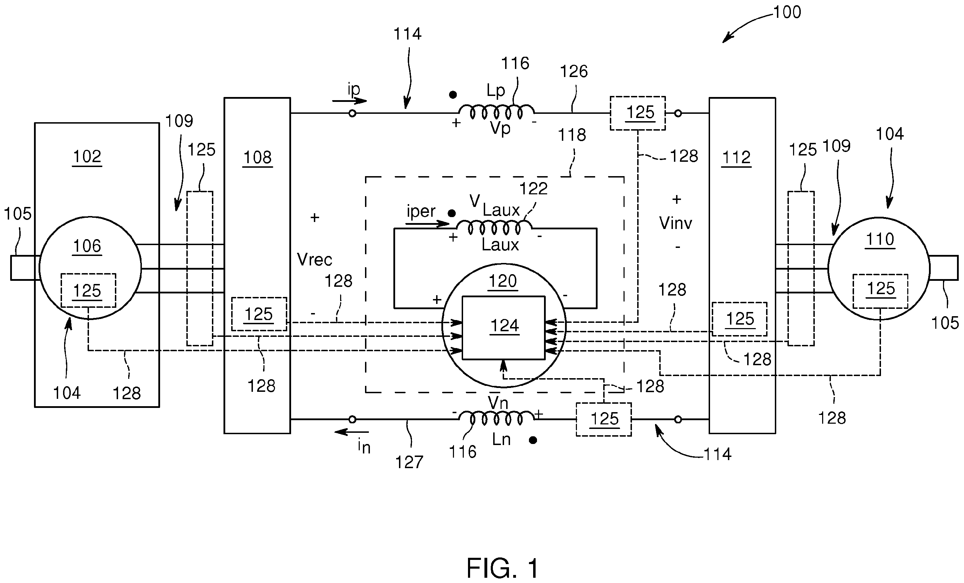

FIG. 1 is a schematic diagram of an exemplary electrical machine drive system 100. Electrical machine drive system 100 includes a power source 102, at least one electrical machine 104, and at least one shaft rotatably coupled to electrical machine 104. In the exemplary embodiment, power source 102 is embodied in a 3-phase alternating current (AC) generator 106. Power source 102 is coupled to a first converter 108 through at least one 3-phase power line 109. First converter 108, in the exemplary embodiment, is embodied in a first current source converter including, without limitation, an AC-to-direct current (DC) current source converter, i.e., a rectifier. Electrical machine drive system 100 also includes a second electrical machine 104 embodied in a 3-phase AC motor 110 coupled to a second converter 112 through 3-phase power lines 109. Second converter 112, in the exemplary embodiment, is embodied in a second current source converter including, without limitation, a DC-to-AC current source converter, i.e., an inverter. Electrical machine drive system 100 further includes at least one DC link 114 coupled to first converter 108 and coupled to second converter 112 and extending therebetween. In the exemplary embodiment, at least one inductor 116 is coupled in electrical series with DC link 114.

Electrical machine drive system 100, in the exemplary embodiment, includes at least one auxiliary converter 118 electrically isolated from generator 106 and motor 110. Auxiliary converter 118 is also electrically isolated from DC link 114. Auxiliary converter 118 includes at least one auxiliary power supply 120 and at least one auxiliary inductor 122 coupled in electrical series with auxiliary power supply 120. Auxiliary inductor 122 is not electrically coupled in series with DC link 114, but is electromagnetically coupled including, without limitation, inductively coupled, to inductor 116. In other embodiments, not shown, auxiliary converter 118 includes a plurality of auxiliary inductors 122 including, without limitation, at least one first auxiliary inductor 122 and at least one second auxiliary inductor 122. In still other embodiments, not shown, auxiliary converter 118 includes a plurality of auxiliary power supplies 120 including, without limitation, a first auxiliary power supply 120 coupled in electrical series with first auxiliary inductor 122 and a second auxiliary power supply 120 coupled in electrical series with second auxiliary inductor 122.

Electrical machine drive system 100, in the exemplary embodiment, includes an auxiliary controller 124 coupled to auxiliary power supply 120. Electrical machine drive system 100 also includes at least one sensor 125 coupled to auxiliary controller 124. Sensor 125 is further coupled to at least one of power source 102, motor 110, first converter 108, second converter 112, DC link 114, and 3-phase power lines 109. In other embodiments, not shown, at least one sensor 125 is further coupled to other locations within electrical machine drive system 100 other than at least one of power source 102, motor 110, first converter 108, second converter 112, DC link 114, and 3-phase power lines 109. In still other embodiments, not shown, one sensor 125 of a plurality of sensors 125 is coupled to more than one auxiliary controller 124 of a plurality of auxiliary controllers 124.

In operation, in the exemplary embodiment, an electrical current transmitted from power source 102 is received by first converter 108. First converter 108 converts AC current received from generator 106 to DC current, *i*ₚ transmitted on a first conductor 126 of DC link 114. Second converter 112 receives DC power from DC link 114 and converts DC current received from DC link 114 to AC current transmitted to motor 110. Also, a second conductor 127 of DC link 114 transmits a return current, *i*ₙ, from second converter 112 back to first converter 108, thereby completing the circuit loop of electrical machine drive system 100. In the exemplary embodiment, first conductor 126 of DC link 114 transmitting *i*ₚ is at a higher voltage potential than second conductor 127 of DC link 114 transmitting *i*ₙ. Inductor 116 maintains a magnetic flux during operation of electrical machine drive system 100. A first inductor 116 coupled in electrical series with first conductor 126 of DC link 114 is embodied in an inductor 116 having an inductance value Lₚ, and a second inductor 116 coupled in electrical series with second conductor 127 of DC link 114 is embodied in an inductor 116 having inductance value Lₙ. Further, *i*ₚ flows through first inductor 116 and *i*ₙ flows through second inductor 116.

Also, in operation, at least one of motor 110 and generator 106 is susceptible to harmonic oscillations during operation of electrical machine drive system 100. Harmonic oscillations of electrical machine drive system 100 include torsional oscillations of at least one of shaft 105 and electrical machine 104 including, without limitation, torsional oscillations of a rotor, not shown, of electrical machine 104. Harmonic oscillations of electrical machine drive system 100 also include lateral oscillations of at least one of shaft 105 and electrical machine 104 including, without limitation, torsional oscillations of rotor of electrical machine 104. In operation, it is possible for electrical machine drive system 100 to experience harmonic oscillations as at least one of torsional oscillations and lateral oscillations. Sensor 125 is configured to detect a physical characteristic of electrical machine drive system 100 representative of harmonic oscillations and transmit a control signal 128 to auxiliary controller 124. Physical characteristics representative of harmonic oscillations of at least one of motor 110 and generator 106 include, without limitation, at least one of a magnitude, a direction, and a frequency of an axial deflection of at least one of a at least one of a rotor and a shaft, not shown, rotatably coupled to at least one of motor 110 and generator 106. Physical characteristics representative of harmonic oscillations of at least one of motor 110 and generator 106 also include, without limitation, at least one of a direction and an angular velocity of a rotation of a at least one of a rotor and a shaft, not shown, rotatably coupled to at least one of motor 110 and generator 106. Physical characteristics representative of harmonic oscillations of at least one of motor 110 and generator 106 also include, without limitation, at least one of a magnitude, a direction, and a frequency of a torque associated with harmonic oscillations of a at least one of a rotor and a shaft, not shown, rotatably coupled to at least one of motor 110 and generator 106. Physical characteristics representative of harmonic oscillations of at least one of motor 110 and generator 106 further include, without limitation, at least one of a magnitude, a direction, and a frequency of at least one of a current transmitted from generator 106 to first converter 108, a current transmitted from first converter 108 to second converter 112, a current transmitted from second converter 108 to motor 110, and a current transmitted from auxiliary power supply 120 to auxiliary inductor 122.

Physical characteristics representative of harmonic oscillations of at least one of motor 110 and generator 106 also include, without limitation, at least one of a magnitude, a direction, and a frequency of a voltage across electrical terminals of at least one of motor 110, generator 106, first converter 108, second converter 112, and auxiliary power supply 120. Physical characteristics representative of harmonic oscillations of at least one of motor 110 and generator 106 further include, without limitation, at least one of a magnitude, a direction, and a frequency of at least one of a vibration and an acceleration associated with at least one of motor 110, generator 106, and rotor and shaft rotatably coupled thereto, and any other component of electrical machine drive system 100 whereupon an occurrence of at least one of vibrations and accelerations is representative of harmonic oscillations in at least one of motor 110 and generator 106. In the exemplary embodiment, sensor 125 includes sensor types configured to detect and measure, for example, the aforementioned physical characteristics including, without limitation, deflection sensors, angular velocity sensors, torque sensors, electrical current sensors, voltage potential sensors, electrical frequency sensors, vibration sensors, and acceleration sensors.

In the exemplary embodiment, auxiliary inductor 122 is configured to alternately energize and de-energize to alternately apply and remove, respectively, a corrective magnetic flux to inductor 116. Auxiliary power supply 120 is configured to transmit AC current, i.e., *i*ₚₑᵣ, to auxiliary inductor 122 including, without limitation, a switched AC current to induce a time-varying corrective magnetic flux through auxiliary inductor 122 having an auxiliary inductance value of Lₐᵤₓ. In other embodiments, not shown, auxiliary power supply 120 is configured to transmit DC current to auxiliary inductor 122 including, without limitation, a switched DC current to induce time-varying corrective magnetic flux through auxiliary inductor 122. Corrective magnetic flux is induced through auxiliary inductor 122 when auxiliary inductor 122 is energized by auxiliary power supply 120. When auxiliary inductor 122 is energized, a non-zero-valued voltage, i.e., *v*_{Laux}, is induced across the pair of terminals of auxiliary inductor 122, and auxiliary inductor 122 is electromagnetically coupled to inductor 116.

Corrective magnetic flux through auxiliary inductor 122 causes a perturbation of magnetic flux including, without limitation, a time-varying perturbation, through inductor 116. First inductor 116 is characterized by a first voltage induced across its pair of terminals, i.e., *v*ₚ, and second inductor 116 is characterized by a second voltage induced across its terminals, i.e., *v*ₙ. When harmonic oscillations are not present in at least one of motor 110 and generator 106, a flow of DC current including, without limitation a steady-state DC current flow, through DC link 114 maintains at least one of a 0 (zero) volt and a negligible voltage across terminals of inductor 116. Harmonic oscillations of at least one of motor 110 and generator 106 introduce time-varying disruptions and oscillations, e.g., AC ripple currents, to DC current transmitted through DC link 114 and thereby cause time-varying disruptions and oscillations in voltage across terminals of inductor 116, such that at least one of *v*ₚ and *v*ₙ are other than at least one of 0 volts and a negligible voltage value.

Alternately energizing and de-energizing auxiliary inductor 122 perturbs magnetic flux through inductor 116 and thereby modulates the flow of DC current through DC link 114 from first converter 108 to second converter 112. Modulation of the DC current flow through DC link 114 through alternately applying and removing corrective magnetic flux to inductor 116 by alternately energizing and de-energizing auxiliary inductor 122 facilitates dampening harmonic oscillations of at least one of motor 110 and generator 106. Similarly, harmonic oscillations arising in generator 106 are prevented from causing harmonic oscillations in motor 110 through alternately applying and removing corrective magnetic flux to inductor 116, as described above. Receipt of control signal 128 including, without limitation, receipt of control signal 128 in real-time, by auxiliary controller 124 is indicative of a presence of harmonic oscillations within at least one of motor 110 and generator 106. In the exemplary embodiment, control signal 128 contains data having a first value when harmonic oscillations are present in at least one of motor 110 and generator 106, and control signal 128 contains data having a second value different from the first value when harmonic oscillations are not present in at least one of motor 110 and generator 106.

In operation of the exemplary embodiment, receipt of control signal 128 having the first value by auxiliary controller 124 enables a flow of electrical current from auxiliary power supply 120 to auxiliary inductor 122 and thereby enables application of corrective magnetic flux by auxiliary inductor 122 by energizing auxiliary inductor 122. Energizing auxiliary inductor 122 facilitates application of corrective magnetic flux to inductor 112 to dampen harmonic oscillations. Receipt of control signal 128 having the second value by auxiliary controller 124 disables the flow of electrical current from auxiliary power supply 120 to auxiliary inductor 122 and thereby removes corrective magnetic flux by auxiliary inductor 122 by de-energizing auxiliary inductor 122. In other embodiments, not shown, control signal 128 contains only the first value of data indicative of harmonic oscillations in at least one of motor 110 and generator 106. In still other embodiments, not shown, control signal 128 is absent and contains no data when harmonic oscillations are absent in at least one of motor 110 and generator 106. In yet other embodiments, not shown, control signal 128 contains a range of varying data values which not only indicate presence of harmonic oscillations in at least one of motor 110 and generator 106, but also quantify properties thereof, e.g., for operational trending purposes. In still other embodiments, not shown, auxiliary controller 124 is configured to adjust the flow of electrical current from auxiliary power supply 120 to auxiliary inductor 122 between a range of values including 0 amps to enable application of an amount of corrective magnetic flux by auxiliary inductor 122 between a range of values including 0 weber depending on an intensity of harmonic oscillations requiring corrective magnetic flux.

In operation of other embodiments, not shown, auxiliary power supply 120 is configured to transmit a multi-phase AC current including, without limitation, a first phase AC current and a second phase AC current, to a plurality of auxiliary inductors 122 including, without limitation, a first auxiliary inductor 122 and a second auxiliary inductor 122. In still other embodiments, not shown, each auxiliary inductor 122 of the plurality of auxiliary inductors 122 receives a single phase of the multi-phase AC, thus facilitating alternating application and removal of corrective magnetic flux to inductor 116 in a multi-dimensional fashion. Multi-dimensional corrective magnetic flux applied to inductor 116 through auxiliary inductor 120 facilitates additional levels of control in electrical machine drive system 100 to dampen harmonic oscillations of at least one of motor 110 and generator 106. Also, in operation of other embodiments, not shown, each auxiliary inductor 122 of the plurality of auxiliary inductors 122 is configured to alternately energize and de-energize to independently apply and remove, respectively, corrective magnetic flux to dampen harmonic oscillations of at least one of motor 110 and generator 106. Alternately energizing and de-energizing each auxiliary inductor 122 of the plurality of auxiliary inductors 122 independently facilitates fine-tuning application of corrective magnetic flux to inductor 116. For example, increasing the flow of current in first auxiliary inductor 122 relative to second auxiliary inductor 122 facilitates a directional application of corrective magnetic flux to inductor 1116 including, without limitation, through vectorial addition and subtraction of corrective magnetic flux by a plurality of auxiliary inductors 122. In still other embodiments, not shown, each auxiliary inductor 122 of the plurality of auxiliary inductors 122 do not alternately energize and de-energize independently, but rather, alternately energize and de-energize substantially simultaneously as a set.

A direction of the current flow through auxiliary inductor 122 facilitates changing a direction of corrective magnetic flux through inductor 116 and thus, adding an additional level of control in electrical machine drive system 100 to dampen harmonic oscillations of at least one of motor 110 and generator 106. The aforementioned electrical isolation of auxiliary converter 118 facilitates functional incorporation and removal, e.g., for installation and maintenance purposes, of auxiliary converter 118 into electrical machine drive system 100 without necessitating ceasing operation thereof.

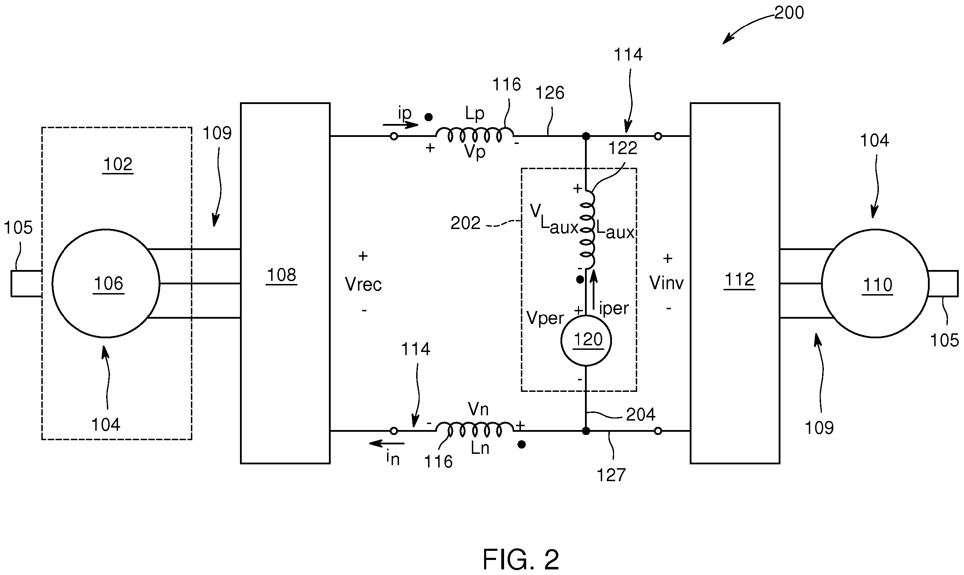

FIG. 2 is a schematic diagram of an alternative electrical machine drive system 200. Electrical machine drive system 200 includes power source 102, at least one electrical machine 104, and at least one shaft 105 rotatably coupled to electrical machine 104. In this alternative embodiment, power source 102 is embodied in 3-phase AC generator 106. Power source 102 is coupled to first converter 108 through 3-phase power lines 109. First converter 108, in this alternative embodiment, is embodied in first current source converter including, without limitation, AC-to-DC current source converter, i.e., rectifier. Electrical machine drive system 200 also includes motor 110 embodied in a 3-phase AC motor coupled to second converter 112 through 3-phase power lines 109. Second converter 112, in this alternative embodiment, is embodied in a second current source converter including, without limitation, DC-to-AC current source converter, i.e., inverter. Electrical machine drive system 200 further includes at least one DC link 114 coupled to first converter 108 and coupled to second converter 112 and extending therebetween. In this alternative embodiment, at least one inductor 116 is coupled in electrical series with DC link 114.

Electrical machine drive system 200, in this alternative embodiment, includes at least one auxiliary converter 202 electrically coupled to, rather than electrically isolated from, generator 106 and motor 110. In this alternative embodiment, DC link 114 includes first conductor 126 and second conductor 127, and auxiliary converter 202 is electrically coupled in parallel to DC link 114 through a parallel branch 204 proximate second converter 112. In other alternative embodiments, not shown, auxiliary converter 202 is electrically coupled in parallel to DC link 114 through parallel branch 204 proximate first converter 108. In still other embodiments, not shown, electrical machine drive system 200 includes a plurality of auxiliary converters 202 including, without limitation, a first auxiliary converter 202 electrically coupled in parallel to DC link 114 proximate first converter 108 and a second auxiliary converter 202 electrically coupled in parallel to DC link 114 proximate second converter 112. In yet other embodiments, not shown, electrical machine drive system 200 includes at least one auxiliary converter 202 electrically coupled in parallel to DC link 114 as described above, and electrical machine drive system 200 also includes at least one auxiliary converter 118 electrically isolated from DC link 114 as shown and described above with reference to FIG. 1.

Auxiliary converter 202 includes at least one auxiliary power supply 120 and at least one auxiliary inductor 122 coupled to auxiliary power supply 120 and DC link 114. Auxiliary inductor 122 is also electromagnetically coupled to inductor 116. In other alternative embodiments, not shown, auxiliary converter 202 includes a plurality of auxiliary inductors 122 including, without limitation, at least one first auxiliary inductor 122 and at least one second auxiliary inductor 122. In still other embodiments, not shown, auxiliary converter 202 includes a plurality of auxiliary power supplies 120 including, without limitation, a first auxiliary power supply 120 coupled to first auxiliary inductor 122 and a second auxiliary power supply 120 coupled to second auxiliary inductor 122. In yet other embodiments, not shown, electrical machine 200 includes auxiliary controller 124 coupled to auxiliary power supply 120, and at least one sensor 125 coupled to auxiliary controller 124, as shown and described above with reference to FIG. 1.

In operation, in this alternative embodiment, electrical current transmitted from power source 102 is received by first converter 108, converted thereby, further transmitted on first conductor 126 to second converter 112, further converted thereby, and still further transmitted to motor 110, as shown and described above with reference to FIG. 1. Inductor 116 maintains magnetic flux during operation of electrical machine drive system 200.

Also, in operation, at least one of motor 110 and generator 106 is susceptible to harmonic oscillations during operation of electrical machine drive system 200. Harmonic oscillations of electrical machine drive system 200 include torsional oscillations of at least one of shaft 105 and electrical machine 104 including, without limitation, torsional oscillations of electrical machine 104 rotor, not shown. Harmonic oscillations of electrical machine drive system 200 also include lateral oscillations of at least one of shaft 105 and electrical machine 104 including, without limitation, lateral oscillations of electrical machine 104 rotor. In operation, it is possible for electrical machine drive system 200 to experience harmonic oscillations as at least one of torsional oscillations and lateral oscillations. Physical characteristics representative of harmonic oscillations of at least one of motor 110 and generator 106 include, without limitation, physical characteristics as described above with reference to FIG. 1, and at least one of a current, voltage, and frequency thereof in parallel branch 204. Auxiliary inductor 122 is configured to alternately energize and de-energize to alternately apply and remove, respectively, corrective magnetic flux to inductor 116. Auxiliary power supply 120 is configured to transmit AC current to auxiliary inductor 122 including, without limitation, a switched AC current to induce a time-varying corrective magnetic flux through auxiliary inductor 122. In other alternative embodiments, auxiliary power supply 120 is configured to transmit DC current to auxiliary inductor 122 including, without limitation, a switched DC current to induce time-varying corrective magnetic flux through auxiliary inductor 122. Corrective magnetic flux is induced through auxiliary inductor 122 when auxiliary inductor 122 is energized by auxiliary power supply 120. When auxiliary inductor 122 is energized, auxiliary inductor 122 is electromagnetically coupled to inductor 116.

Corrective magnetic flux through auxiliary inductor 122 causes a perturbation of magnetic flux including, without limitation, a time-varying perturbation, through inductor 116. Perturbation of magnetic flux through inductor 116 thereby modulates the flow of DC current through DC link 114 from first converter 108 to second converter 112. Modulation of the DC current flow through DC link 114 through alternately applying and removing corrective magnetic flux to inductor 116 by alternately energizing and de-energizing auxiliary inductor 122 facilitates dampening harmonic oscillations of at least one of motor 110 and generator 106. Similarly, harmonic oscillations arising in generator 106 are prevented from causing harmonic oscillations in motor 110 through alternately applying and removing corrective magnetic flux to inductor 116, as described above.

In operation of this alternative embodiment, energizing auxiliary inductor 122 not only facilitates application of corrective magnetic flux to inductor 112 to dampen harmonic oscillations, but also modulates the DC current flow through DC link 114 by at least one of adding and subtracting an amount of current the DC current flow therein, i.e., through parallel branch 204. Thus, auxiliary converter 202 facilitates adding an additional level of control in electrical machine drive system 200 to dampen harmonic oscillations of at least one of motor 110 and generator 106. Disabling the electrical current flow from auxiliary power supply 120 to auxiliary inductor 122, i.e., de-energizing auxiliary inductor 122, removes both corrective magnetic flux to inductor 116 and a modulating effect on the current flowing through DC link 114. In other alternative embodiments, not shown, auxiliary converter 202 is configured, e.g., by inclusion of auxiliary controller 124 as shown and described in FIG. 1, to adjust the flow of electrical current from auxiliary power supply 120 to auxiliary inductor 122 between a range of values including 0 amps to enable application of an amount of at least one of corrective magnetic flux and modulating current between a range of values including 0 weber and 0 amps, respectively, depending on an intensity of harmonic oscillations requiring corrective magnetic flux and modulating current, respectively.

In operation of other alternative embodiments, not shown, auxiliary power supply 120 is configured to transmit a multi-phase AC current including, without limitation, a first phase AC current and a second phase AC current, to a plurality of auxiliary inductors 122 including, without limitation, a first auxiliary inductor 122 and a second auxiliary inductor 122. In still other alternative embodiments, not shown, each auxiliary inductor 122 of the plurality of auxiliary inductors 122 receives a single phase of the multi-phase AC, thus facilitating alternating application and removal of corrective magnetic flux to inductor 116 in a multi-dimensional fashion. Multi-dimensional corrective magnetic flux applied to inductor 116 through auxiliary inductor 120 facilitates additional levels of control in electrical machine drive system 200 to dampen harmonic oscillations of at least one of motor 110 and generator 106. Similarly, inclusion of a plurality of at least one of auxiliary power supplies 120 and auxiliary inductors 122 in electrical machine drive system 200 facilitates at least one of addition and subtraction of the current to and from, respectively, DC link 114 on at least one of a location basis, a directional basis, and a magnitude basis, thereby providing still further levels of control in electrical machine drive system 200 to dampen harmonic oscillations of at least one of motor 110 and generator 106.

In operation of still other alternative embodiments, not shown, each auxiliary inductor 122 of the plurality of auxiliary inductors 122 is configured to alternately energize and de-energize to independently apply and remove, respectively, corrective magnetic flux to dampen harmonic oscillations of at least one of motor 110 and generator 106. Alternately energizing and de-energizing each auxiliary inductor 122 of the plurality of auxiliary inductors 122 independently facilitates fine-tuning application of corrective magnetic flux to inductor 116, e.g., as described above with reference to FIG. 1. Further, alternately energizing and de-energizing each auxiliary inductor 122 of the plurality of auxiliary inductors 122 independently facilitates fine-tuning application of the aforementioned modulating current to DC link 114. In still other alternative embodiments, not shown, each auxiliary inductor 122 of the plurality of auxiliary inductors 122 do not alternately energize and de-energize independently, but rather, alternately energize and de-energize substantially simultaneously as a set.

A direction of the current flow through auxiliary inductor 122 facilitates changing a direction of corrective magnetic flux through inductor 116 and thus, adding an additional level of control in electrical machine drive system 200 to dampen harmonic oscillations of at least one of motor 110 and generator 106. Similarly, in this alternative embodiment, a direction of the current flow through auxiliary inductor 122 further facilitates changing a direction of the aforementioned modulating current to DC link 114 to dampen harmonic oscillations of at least one of motor 110 and generator 106.

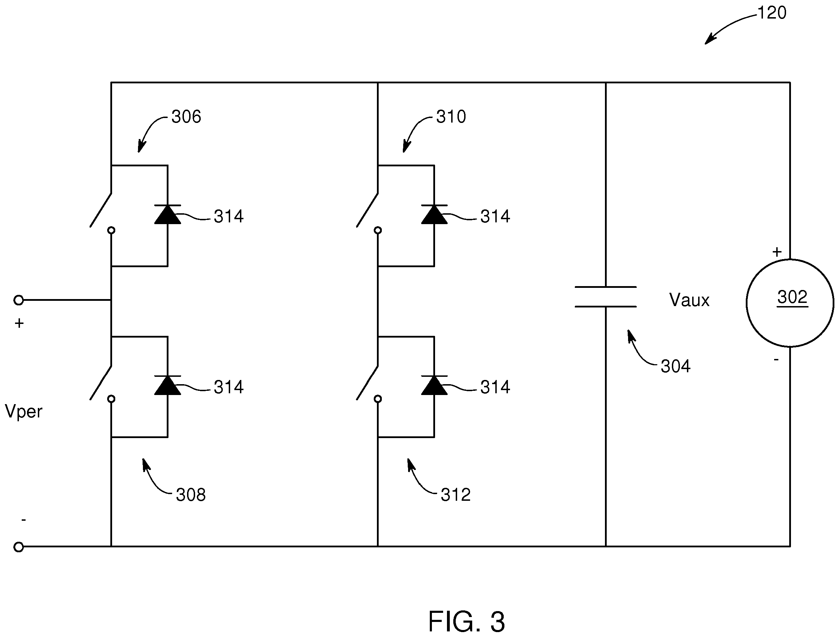

FIG. 3 is a schematic diagram of an exemplary auxiliary power supply 120 that may be used in electrical machine drive system 100 and electrical machine drive system 200 shown in FIGs. 1 and 2, respectively. In the exemplary embodiment, an auxiliary voltage source 302 is coupled in electrical parallel with a capacitor 304, and a plurality of switching devices are coupled in electrical parallel with auxiliary voltage source 302. In other embodiments, not shown, auxiliary power supply 120 does not include capacitor 304. A first switching device 306 is coupled in electrical series to a second switching device 308, and both of first switching device 306 and second switching device 308 are further coupled in electrical parallel to auxiliary voltage source 302. A third switching device 310 is coupled in electrical series to a fourth switching device 312, and both of third switching device 310 and fourth switching device 312 are further coupled in electrical parallel to auxiliary voltage source 302. An antiparallel diode 314 is coupled in parallel across a pair of terminals of each of first switching device 306, second switching device 308, third switching device 310, and fourth switching device 312. In other embodiments, not shown, antiparallel diode 314 is not coupled to at least one of first switching device 306, second switching device 308, third switching device 310, and fourth switching device 312.

In operation, in the exemplary embodiment, auxiliary voltage source 302 is embodied in a DC voltage source configured to induce an auxiliary voltage, i.e., Vₐᵤₓ, across its pair of terminals. A controlled switching of at least one of first switching device 306, second switching device 308, third switching device 310, and fourth switching device 312 induces an output voltage, i.e., *v*ₚₑᵣ, across the pair of terminals of second switching device 308. In other embodiments, not shown, *v*ₚₑᵣ is induced across the pair of terminals of first switching device 306 rather than second switching device 308. *v*ₚₑᵣ is embodied in a time varying output voltage signal including, without limitation, an AC signal. *v*ₚₑᵣ induces *i*ₚₑᵣ, i.e., the current transmitted to at least one auxiliary inductor 122, as shown and described above with reference to FIGs. 1 and 2.

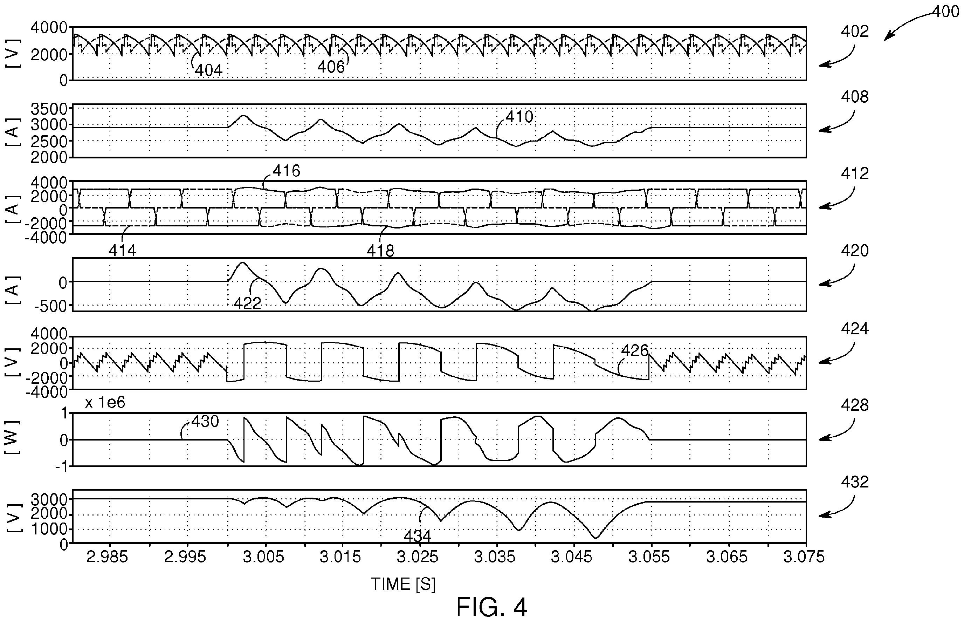

FIG. 4 is a graphical representation, i.e., graph, 400 of operation of at least one of electrical machine drive system 100, electrical machine drive system 200, and auxiliary power supply 120 shown in FIGs. 1, 2, and 3, respectively. In the exemplary embodiment, a waveform 402 depicts plotted voltage values of first converter output voltage 404, i.e., *v*_{rec}, versus time in seconds. Waveform 402 also depicts plotted voltage values of second converter input voltage 406, i.e., *v*ᵢₙᵥ, versus time. A waveform 408 depicts plotted current values in amps of a DC link current 410, i.e., *i*ₚ, versus time in seconds. A waveform 412 depicts plotted current values, in amps versus time in seconds, of a first phase AC current 414, a second phase AC current 416, and a third phase AC current 418 transmitted from second converter 112 to motor 110 on 3-phase power lines 109.

A waveform 420, in the exemplary embodiment, depicts plotted current values in amps of an auxiliary converter current 422, i.e., *i*ₚₑᵣ, versus time in seconds. A waveform 424 depicts plotted voltage values of an auxiliary converter voltage 426, i.e., *v*ₚₑᵣ, versus time in seconds. A waveform 428 depicts plotted power values in megawatts of an auxiliary converter instantaneous power 430, i.e. Pₚₑᵣ = *i*ₚₑᵣ ^{∗} *v*ₚₑᵣ, versus time in seconds. A waveform 432 depicts plotted voltage values of an auxiliary inductor voltage 434, i.e., *v*_{Laux}, versus time in seconds.

A waveform 408, in the exemplary embodiment, depicts DC link current 410 in a steady-state at approximately 2900 amps from the start of operation at time 2.980 seconds until approximately 3.000 seconds. Similarly, between times 2.890 seconds and 3.000 seconds, auxiliary converter instantaneous power 430 is 0 watts and auxiliary inductor 122 is de-energized. Likewise, between times 2.890 seconds and 3.000 seconds, auxiliary converter current 422 and auxiliary inductor voltage 434 are at steady-state values of 0 amps and 3000 volts, respectively.

At time 3.000 seconds, in the exemplary embodiment, harmonic oscillations in at least one of motor 110 and generator 106 are introduced and auxiliary inductor 122 is energized by an AC current transmitted from auxiliary power supply 120 to auxiliary inductor 122, as shown in waveform 420. In response to an AC voltage induced by auxiliary power supply 120, a varying voltage across terminals of auxiliary inductor 122 is induced, as shown in waveform 432. Time-varying auxiliary inductor voltage 434 perturbs the magnetic flux maintained through inductor 116 and modulates DC link current 410 in a time-varying manner, as shown in waveform 408.

At approximately time 3.055 seconds, in the exemplary embodiment, harmonic oscillations in at least one of motor 110 and generator 106 arc eliminated on account of corrective magnetic flux provided by auxiliary inductor 122 between times 3.000 and 3.055 seconds. After 3.055 seconds, in the exemplary embodiment, pre-harmonic oscillations introduction steady-state values of DC link current 410, auxiliary converter current 422, auxiliary converter instantaneous power 430, and auxiliary inductor voltage 434 return, as shown in waveform 408, waveform 420, waveform 428, and waveform 432, respectively. Throughout the entire operation time, in the exemplary embodiment, waveform 402 and waveform 412 remain substantially constant despite introduction of harmonic oscillations of at least one of motor 110 and generator 106 between times 3.000 and 3.055 seconds. Therefore, in the exemplary embodiment, alternately energizing and de-energizing auxiliary inductor 122 to alternately apply and remove corrective magnetic flux through auxiliary inductor 122 effectively dampens harmonic oscillations of at least one motor 110 and generator 106, as shown and described above with reference to FIGs. 1 and 2.

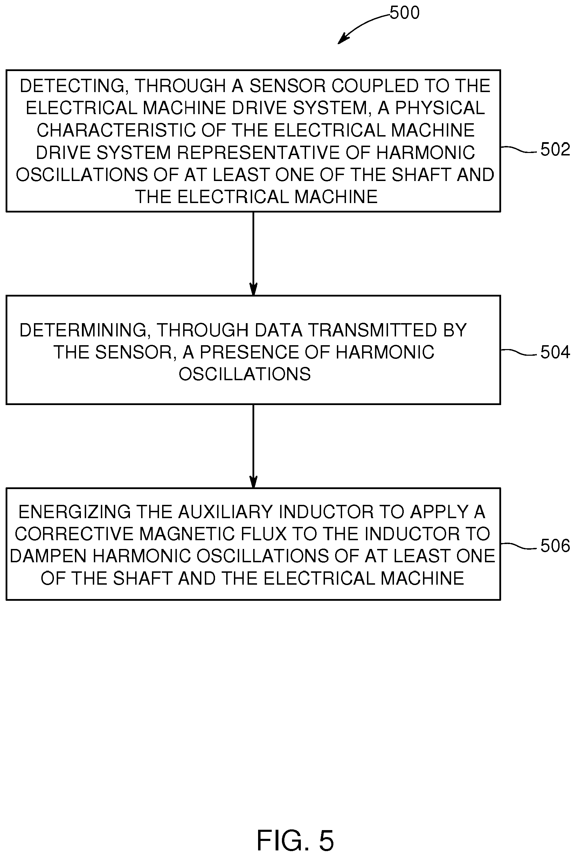

FIG. 5 is a flowchart diagram of an exemplary method 500 of damping harmonic oscillations of an electrical machine drive system that may be used with electrical machine drive system 100 and electrical machine drive system 200 shown in FIGs. 1 and 2, respectively. Referring to FIGs. 1-5, method 500 includes detecting 502, through sensor 125 coupled to at least one of electrical machine drive system 100 and electrical machine drive system 200, a physical characteristic of at least one of electrical machine drive system 100 and electrical machine drive system 200 representative of harmonic oscillations of at least one of shaft 105 and electrical machine 104. Method 500 also includes determining 504, through data transmitted by sensor 125, a presence of harmonic oscillations. Method 500 further includes energizing 506 auxiliary inductor 122 to apply a corrective magnetic flux to inductor 116 to dampen harmonic oscillations of at least one of shaft 105 and electrical machine 104.

The above-described auxiliary power converters for reduction of harmonic oscillations in electrical machines and associated systems and methods reduce sub-synchronous torsional interactions (SSTIs) of shafts and rotating machinery including electrical machines in rotating equipment trains. The above-described embodiments also mitigate undesirable effects of SSTIs and aberrant torques arising therefrom in turbomachinery systems. The above-described embodiments further reduce torque imbalances in electrical machines employed in turbomachinery systems. The above-described auxiliary power converters for reduction of harmonic oscillations in electrical machines and associated systems and methods also reduce operating and maintenance costs and increase operational efficiency of turbomachinery systems. The above-described embodiments further provide less complex and less expensive SSTI mitigation devices, systems, and methods that are easier to operate and integrate into existing plant designs. The above-described embodiments also enable installation and maintenance of SSTI mitigation devices and systems without shutting down turbomachinery system operations.

An exemplary technical effect of the above-described auxiliary power converters for reduction of harmonic oscillations in electrical machines and associated systems and methods includes at least one of the following: (a) reducing SSTIs of shafts and rotating machinery including electrical machines in rotating equipment trains; (b) mitigating undesirable effects of SSTIs and aberrant torques arising therefrom in turbomachinery systems; (c) reducing torque imbalances in electrical machines employed in turbomachinery systems; (d) reducing operating and maintenance costs and increasing operational efficiency of turbomachinery systems; (e) providing less complex and less expensive SSTI mitigation devices, systems, and methods that are easier to operate and integrate into existing plant designs; and (f) enabling installation and maintenance of SSTI mitigation devices and systems without shutting down turbomachinery system operations.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer-readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device.

## Claims

1. A power converter (118) for an electrical machine drive system (100,200) that includes a power source (102) and an electrical machine (104) including a shaft (105), said power converter comprising:
a first converter (108) coupled to the power source;
a second converter (112) coupled to the electrical machine; and
at least one direct current (DC) link (114) coupled to said first converter and coupled to said second converter and extending therebetween, said at least one DC link comprising at least one inductor (116) configured to maintain a magnetic flux during operation of the electrical machine drive system;
**characterized by** at least one auxiliary converter (118) electrically isolated from the power source (102) and the electrical machine (104), said at least one auxiliary converter (118) comprising:
an auxiliary power supply (120); and
at least one auxiliary inductor (122) coupled to said auxiliary power supply (120) and electromagnetically coupled to said at least one inductor (116), wherein said at least one auxiliary inductor (122) is configured to alternately energize and de-energize to alternately apply and remove, respectively, a corrective magnetic flux to said at least one inductor (116) to dampen harmonic oscillations of at least one of the shaft (105) and the electrical machine (104).

2. The power converter (118) in accordance with claim 1, wherein said auxiliary power supply (120) is configured to supply an alternating current (AC) to said at least one auxiliary inductor (122) to alternately apply and remove, respectively, the corrective magnetic flux through a perturbation of the magnetic flux.

3. The power converter (118) in accordance with any preceding claim, further comprising a plurality of auxiliary inductors (122) comprising said at least one auxiliary inductor (122), said plurality of auxiliary inductors further comprising at least one first auxiliary inductor and at least one second auxiliary inductor, wherein said auxiliary power supply (120) is further configured to supply a multi-phase AC current including a first phase AC current transmitted to said first auxiliary inductor and a second phase AC current transmitted to said second auxiliary inductor.

4. An electrical machine drive system (100,200) comprising:
a power source (102);
at least one electrical machine (104) comprising a shaft (105); and
a power converter (118) in accordance with any preceding claim.

5. The electrical machine drive system (100,200) in accordance with claim 4, wherein said at least one auxiliary inductor (122) is not electrically coupled in series to said at least one DC link (114).

6. The electrical machine drive system (100,200) in accordance with claim 4 or claim 5, wherein said at least one auxiliary converter (118) is further electrically isolated from said at least one DC link (114).

7. The electrical machine drive system (100,200) in accordance with any of claims 4 to 6, wherein said at least one auxiliary converter (118) is not electrically isolated from said power source (102) and said at least one electrical machine (104), said at least one auxiliary converter electrically coupled in parallel to said at least one DC link (114) proximate at least one of:
said first converter (108); and
said second converter (112).

8. The electrical machine drive system (100,200) in accordance with any of claims 4 to 7, further comprising a plurality of auxiliary converters (118) comprising said at least one auxiliary converter (118), said plurality of auxiliary converters further comprising:
at least one first auxiliary converter electrically isolated from said at least one DC link (114); and
at least one second auxiliary converter electrically coupled in parallel to said at least one DC link proximate at least one of:
said first converter (108); and
said second converter (112).

9. The electrical machine drive system (100,200) in accordance with any of claims 4 to 8, further comprising a plurality of electrical machines (104) comprising said at least one electrical machine (104), said plurality of electrical machines further comprising:
at least one generator (106) coupled to said first converter (108), said at least one generator configured as said power source (102); and
at least one motor (110) coupled to said second converter (112).

10. The electrical machine drive system (100,200) in accordance with any of claims 4 to 9, wherein:
said power source (102) comprises an alternating current (AC) power source (102); and
said first converter (108) comprises an AC-to-DC converter (108).

11. The electrical machine drive system (100,200) in accordance with any of claims 4 to 10, wherein said first converter (108) comprises a first current source converter (108).

12. The electrical machine drive system (100,200) in accordance with any of claims 4 to 11, wherein said second converter (112) comprises a second current source converter (112).

13. The electrical machine drive system (100,200) in accordance with any of claims 4 to 12, wherein:
said at least one electrical machine (104) comprises at least one AC motor (110); and
said second converter (112) comprises a DC-to-AC converter (112).

14. The electrical machine drive system (100,200) in accordance with any of claims 4 to 13, further comprising:
an auxiliary controller (124) coupled to said auxiliary power supply (120); and
at least one sensor (125) coupled to said auxiliary controller, said sensor configured to detect a physical characteristic of said electrical machine drive system representative of harmonic oscillations and transmit a control signal (128) to said auxiliary controller to alternately apply and remove the corrective magnetic flux to said at least one inductor (116) through said auxiliary inductor (122), wherein said at least one sensor is further coupled to at least one of:
said power source (102);
said at least one electrical machine (104);
said first converter (108);
said second converter (112); and
said at least one DC link (114).

15. A method of damping harmonic oscillations of an electrical machine drive system that includes a power source (102), an electrical machine (104) including a shaft (105), a direct current (DC) link (114) including an inductor (116), and an auxiliary converter (118) including an auxiliary inductor (122) electromagnetically coupled to the inductor (116), said method comprising:
detecting, through a sensor coupled to the electrical machine drive system, a physical characteristic of the electrical machine drive system representative of harmonic oscillations of at least one of the shaft (105) and the electrical machine (104);
determining, through data transmitted by the sensor, a presence of harmonic oscillations; and
energizing the auxiliary inductor (122) to apply a corrective magnetic flux to the inductor (116) to dampen harmonic oscillations of at least one of the shaft (105) and the electrical machine (104).

## Patentansprüche

1. Stromwandler (118) für ein Antriebssystem für eine elektrische Maschine (100, 200), das eine Stromquelle (102) und eine elektrische Maschine (104) einschließlich einer Welle (105) einschließt, wobei der Stromwandler umfasst:
einen ersten Wandler (108), der mit der Stromquelle gekoppelt ist;
einen zweiten Wandler (112), der mit der elektrischen Maschine gekoppelt ist; und
mindestens eine Gleichstrom- (DC-) Verbindung (114), die mit dem ersten Wandler gekoppelt ist und mit dem zweiten Wandler gekoppelt ist und sich dazwischen erstreckt, wobei die mindestens eine DC-Verbindung mindestens einen Induktor (116) umfasst, der konfiguriert ist, um einen Magnetfluss während des Betriebs des Antriebssystem für eine elektrische Maschine aufrechtzuerhalten;
**gekennzeichnet durch** mindestens einen Hilfswandler (118), der von der Stromquelle (102) und der elektrischen Maschine (104) elektrisch isoliert ist, wobei der mindestens eine Hilfswandler (118) Folgendes umfasst:
eine Hilfsstromversorgung (120) und
mindestens einen Hilfsinduktor (122), der mit der Hilfsstromversorgung (120) gekoppelt ist und elektromagnetisch mit dem mindestens einen Induktor (116) gekoppelt ist, wobei der mindestens eine Hilfsinduktor (122) so konfiguriert ist, dass er abwechselnd erregt und entregt wird, um abwechselnd einen korrigierenden Magnetfluss an den mindestens einen Induktor (116) anzulegen bzw. zu entfernen, um harmonische Schwingungen der Welle (105) und/oder der elektrischen Maschine (104) zu dämpfen.

2. Stromwandler (118) nach Anspruch 1, wobei die Hilfsstromversorgung (120) konfiguriert ist, um einen Wechselstrom (AC) dem mindestens einen Hilfsinduktor (122) zuzuführen, um den korrigierenden Magnetfluss durch eine Störung des Magnetflusses abwechselnd anzulegen bzw. zu entfernen.

3. Stromwandler (118) nach einem der vorstehenden Ansprüche, ferner umfassend eine Vielzahl von Hilfsinduktoren (122), die mindestens einen Hilfsinduktor (122) umfassen, wobei die Vielzahl von Hilfsinduktoren ferner mindestens einen ersten Hilfsinduktor und mindestens einen zweiten Hilfsinduktor umfasst, wobei die Hilfsstromversorgung (120) ferner konfiguriert ist, um einen mehrphasigen Wechselstrom bereitzustellen, der einen Wechselstrom der ersten Phase, der an den ersten Hilfsinduktor übertragen wird, und einen Wechselstrom der zweiten Phase, der an den zweiten Hilfsinduktor übertragen wird, einschließt.

4. Antriebssystem für elektrische Maschinen (100, 200), umfassend:
eine Stromquelle (102);
mindestens eine elektrische Maschine (104), umfassend eine Welle (105); und
einen Stromwandler (118) nach einem der vorstehenden Ansprüche.

5. Antriebssystem für eine elektrische Maschine (100, 200) nach Anspruch 4, wobei der mindestens eine Hilfsinduktor (122) nicht elektrisch in Reihe mit der mindestens einen DC-Verbindung (114) gekoppelt ist.

6. Antriebssystem für eine elektrische Maschine (100, 200) nach Anspruch 4 oder 5, wobei der mindestens eine Hilfswandler (118) ferner von der mindestens einen DC-Verbindung (114) elektrisch isoliert ist.

7. Antriebssystem für eine elektrische Maschine (100, 200) nach einem der Ansprüche 4 bis 6, wobei der mindestens eine Hilfswandler (118) nicht elektrisch von der Stromquelle (102) und der mindestens einen elektrischen Maschine (104) isoliert ist, wobei der mindestens eine Hilfswandler an die mindestens eine DC-Verbindung (114) in der Nähe von mindestens einem der Folgendem elektrisch parallel gekoppelt ist:
dem ersten Wandler (108) und
dem zweiten Wandler (112).

8. Antriebssystem für eine elektrische Maschine (100, 200) nach einem der Ansprüche 4 bis 7, ferner umfassend eine Vielzahl von Hilfswandlern (118), die den mindestens einen Hilfswandler (118) umfassen, wobei die Vielzahl von Hilfswandlern ferner umfasst:
mindestens einen ersten Hilfswandler, der von der mindestens einen DC-Verbindung (114) elektrisch isoliert ist; und
mindestens einen zweiten Hilfswandler, der mit der mindestens einen DC-Verbindung in der Nähe von mindestens einem der Folgendem elektrisch parallel gekoppelt ist:
dem ersten Wandler (108) und
dem zweiten Wandler (112).

9. Antriebssystem für eine elektrische Maschine (100, 200) nach einem der Ansprüche 4 bis 8, ferner umfassend eine Vielzahl von elektrischen Maschinen (104), welche die mindestens eine elektrische Maschine (104) umfassen, wobei die Vielzahl von elektrischen Maschinen ferner umfasst:
mindestens einen Generator (106), der mit dem ersten Wandler (108) gekoppelt ist, wobei der mindestens eine Generator als die Stromquelle (102) konfiguriert ist; und
mindestens einen Motor (110), der mit dem zweiten Wandler (112) gekoppelt ist.

10. Antriebssystem für eine elektrische Maschine (100, 200) nach einem der Ansprüche 4 bis 9, wobei:
die Stromquelle (102) eine Wechselstrom- (AC-) Stromquelle (102) umfasst und
der erste Wandler (108) einen AC-zu-DC-Wandler (108) umfasst.

11. Antriebssystem für eine elektrische Maschine (100, 200) nach einem der Ansprüche 4 bis 10, wobei der erste Wandler (108) einen ersten Stromquellenwandler (108) umfasst.

12. Antriebssystem für eine elektrische Maschine (100, 200) nach einem der Ansprüche 4 bis 11, wobei der zweite Wandler (112) einen zweiten Stromquellenwandler (112) umfasst.

13. Antriebssystem für eine elektrische Maschine (100, 200) nach einem der Ansprüche 4 bis 12, wobei:
die mindestens eine elektrische Maschine (104) mindestens einen AC-Motor (110) umfasst und
der zweite Wandler (112) einen DC-zu-AC-Wandler (112) umfasst.

14. Antriebssystem für eine elektrische Maschine (100, 200) nach einem der Ansprüche 4 bis 13, ferner umfassend:
eine Hilfssteuerung (124), die mit der Hilfsstromversorgung (120) gekoppelt ist; und
mindestens einen Sensor (125), der mit der Hilfssteuerung gekoppelt ist, wobei der Sensor konfiguriert ist, um eine physikalische Eigenschaft des Antriebssystems für eine elektrische Maschine zu erfassen, die harmonische Schwingungen darstellt, und ein Steuersignal (128) an die Hilfssteuerung zu übertragen, um abwechselnd den korrigierenden Magnetfluss an den mindestens einen Induktor (116) durch den Hilfsinduktor (122) anzulegen und zu entfernen, wobei der mindestens eine Sensor ferner mit mindestens einem der Folgendem gekoppelt ist:
der Stromquelle (102);
der mindestens einen elektrischen Maschine (104);
dem ersten Wandler (108);
dem zweiten Wandler (112) und
der mindestens einen DC-Verbindung (114).

15. Verfahren zum Dämpfen von harmonischen Schwingungen eines Antriebssystems für eine elektrische Maschine, das eine Stromquelle (102), eine elektrische Maschine (104), die eine Welle (105) einschließt, eine Gleichstrom-(DC-) Verbindung (114), die einen Induktor (116) einschließt, und einen Hilfswandler (118), der einen Hilfsinduktor (122) einschließt, der elektromagnetisch mit dem Induktor (116) gekoppelt ist, einschließt, wobei das Verfahren Folgendes umfasst:
Erfassen einer physikalischen Eigenschaft des Antriebssystems für eine elektrische Maschine, die harmonische Schwingungen der Welle (105) und/oder der elektrischen Maschine (104) darstellt, durch einen Sensor, der mit dem Antriebssystem der elektrischen Maschine gekoppelt ist;
Bestimmen mittels Daten, die vom Sensor übertragen werden, des Vorhandenseins von harmonischen Schwingungen und
Erregen des Hilfswandlers (122), um einen korrigierenden Magnetfluss auf den Induktor (116) anzuwenden, um harmonische Schwingungen der Welle (105) und/oder der elektrischen Maschine (104) zu dämpfen.

## Revendications

1. Convertisseur d'énergie (118) pour un système d'entraînement de machine électrique (100, 200) qui inclut une source d'énergie (102) et une machine électrique (104) incluant un arbre (105), ledit convertisseur d'énergie comprenant :
un premier convertisseur (108) couplé à la source d'énergie ;
un deuxième convertisseur (112) couplé à la machine électrique ; et
au moins une liaison (114) à courant continu (CC) couplée audit premier convertisseur et couplée audit deuxième convertisseur et s'étendant entre eux, ladite au moins une liaison à CC comprenant au moins un inducteur (116) configuré pour maintenir un flux magnétique pendant le fonctionnement du système d'entraînement de machine électrique ;
**caractérisé par** au moins un convertisseur auxiliaire (118) isolé électriquement de la source d'énergie (102) et de la machine électrique (104), ledit au moins un convertisseur auxiliaire (118) comprenant :
une alimentation électrique auxiliaire (120) ; et
au moins un inducteur auxiliaire (122) couplé à ladite alimentation électrique auxiliaire (120) et couplé électromagnétiquement audit au moins un inducteur (116), dans lequel ledit au moins un inducteur auxiliaire (122) est configuré pour se mettre sous tension et hors tension alternativement pour appliquer et retirer alternativement, respectivement, un flux magnétique correctif audit au moins un inducteur (116) pour amortir les oscillations harmoniques d'au moins l'un parmi l'arbre (105) et la machine électrique (104).

2. Convertisseur d'énergie (118) selon la revendication 1, dans lequel ladite alimentation électrique auxiliaire (120) est configurée pour alimenter en courant alternatif (CA) ledit au moins un inducteur auxiliaire (122) pour appliquer et retirer alternativement, respectivement, le flux magnétique correctif à travers une perturbation du flux magnétique.

3. Convertisseur d'énergie (118) selon l'une quelconque revendication précédente, comprenant en outre une pluralité d'inducteurs auxiliaires (122) comprenant ledit au moins un inducteur auxiliaire (122), ladite pluralité d'inducteurs auxiliaires comprenant en outre au moins un premier inducteur auxiliaire et au moins un deuxième inducteur auxiliaire, dans lequel ladite alimentation électrique auxiliaire (120) est en outre configurée pour fournir un courant CA multiphasé incluant un premier courant CA de phase transmis audit premier inducteur auxiliaire et un deuxième courant CA de phase transmis audit deuxième inducteur auxiliaire.

4. Système d'entraînement de machine électrique (100, 200) comprenant :
une source d'énergie (102) ;
au moins une machine électrique (104) comprenant un arbre (105) ; et
un convertisseur d'énergie (118) selon l'une quelconque revendication précédente.

5. Système d'entraînement de machine électrique (100, 200) selon la revendication 4, dans lequel ledit au moins un inducteur auxiliaire (122) n'est pas couplé électriquement en série à ladite au moins une liaison à CC (114).

6. Système d'entraînement de machine électrique (100, 200) selon la revendication 4 ou la revendication 5, dans lequel ledit au moins un convertisseur auxiliaire (118) est en outre isolé électriquement de ladite au moins une liaison à CC (114).

7. Système d'entraînement de machine électrique (100, 200) selon l'une quelconque des revendications 4 à 6, dans lequel ledit au moins un convertisseur auxiliaire (118) n'est pas isolé électriquement de ladite source d'énergie (102) et de ladite au moins une machine électrique (104), ledit au moins un convertisseur auxiliaire couplé électriquement en parallèle à ladite au moins une liaison à CC (114) à proximité d'au moins l'un parmi :
ledit premier convertisseur (108) ; et
ledit deuxième convertisseur (112).

8. Système d'entraînement de machine électrique (100, 200) selon l'une quelconque des revendications 4 à 7, comprenant en outre une pluralité de convertisseurs auxiliaires (118) comprenant ledit au moins un convertisseur auxiliaire (118), ladite pluralité de convertisseurs auxiliaires comprenant en outre :
au moins un premier convertisseur auxiliaire isolé électriquement de ladite au moins une liaison à CC (114) ; et
au moins un deuxième convertisseur auxiliaire couplé électriquement en parallèle à ladite au moins une liaison à CC à proximité d'au moins l'un parmi :
ledit premier convertisseur (108) ; et
ledit deuxième convertisseur (112).

9. Système d'entraînement de machine électrique (100, 200) selon l'une quelconque des revendications 4 à 8, comprenant en outre une pluralité de machines électriques (104) comprenant ladite au moins une machine électrique (104), ladite pluralité de machines électriques comprenant en outre :
au moins un générateur (106) couplé audit premier convertisseur (108), ledit au moins un générateur configuré comme ladite source d'énergie (102) ; et
au moins un moteur (110) couplé audit deuxième convertisseur (112).

10. Système d'entraînement de machine électrique (100, 200) selon l'une quelconque des revendications 4 à 9, dans lequel :
ladite source d'énergie (102) comprend une source d'énergie (102) à courant alternatif (CA) ; et
ledit premier convertisseur (108) comprend un convertisseur alternatif-continu (108).

11. Système d'entraînement de machine électrique (100, 200) selon l'une quelconque des revendications 4 à 10, dans lequel ledit premier convertisseur (108) comprend un premier convertisseur de source de courant (108).

12. Système d'entraînement de machine électrique (100, 200) selon l'une quelconque des revendications 4 à 11, dans lequel ledit deuxième convertisseur (112) comprend un deuxième convertisseur de source de courant (112).

13. Système d'entraînement de machine électrique (100, 200) selon l'une quelconque des revendications 4 à 12, dans lequel :
ladite au moins une machine électrique (104) comprend au moins un moteur à CA (110) ; et
ledit deuxième convertisseur (112) comprend un convertisseur continu-alternatif (112).

14. Système d'entraînement de machine électrique (100, 200) selon l'une quelconque des revendications 4 à 13, comprenant en outre :
un contrôleur auxiliaire (124) couplé à ladite alimentation électrique auxiliaire (120) ; et
au moins un capteur (125) couplé audit contrôleur auxiliaire, ledit capteur configuré pour détecter une caractéristique physique dudit système d'entraînement de machine électrique représentative des oscillations harmoniques et transmettre un signal de contrôle (128) audit contrôleur auxiliaire pour appliquer et retirer alternativement le flux magnétique correctif audit au moins un inducteur (116) à travers ledit inducteur auxiliaire (122), dans lequel ledit au moins un capteur est en outre couplé à au moins l'un parmi :
ladite source d'énergie (102) ;
ladite au moins une machine électrique (104) ;
ledit premier convertisseur (108) ;
ledit deuxième convertisseur (112) ; et
ladite au moins une liaison à CC (114).

15. Procédé d'amortissement des oscillations harmoniques d'un système d'entraînement de machine électrique qui inclut une source d'énergie (102), une machine électrique (104) incluant un arbre (105), une liaison (114) à courant continu (CC) incluant un inducteur (116), et un convertisseur auxiliaire (118) incluant un inducteur auxiliaire (122) couplé électromagnétiquement à l'inducteur (116), ledit procédé comprenant :
la détection, par l'intermédiaire d'un capteur couplé au système d'entraînement de machine électrique, d'une caractéristique physique du système d'entraînement de machine électrique représentative des oscillations harmoniques d'au moins l'un parmi l'arbre (105) et la machine électrique (104) ;
la détermination, par l'intermédiaire de données transmises par le capteur, d'une présence d'oscillations harmoniques ; et
la mise sous tension de l'inducteur auxiliaire (122) pour appliquer un flux magnétique correctif à l'inducteur (116) pour amortir les oscillations harmoniques d'au moins l'un parmi l'arbre (105) et la machine électrique (104).
